# EUROPEAN PATENT SPECIFICATION

(11) **EP 2 988 001 B1**
(45) Date of publication and mention of the grant of the patent: **07.12.2016**
(21) Application number: 15159762.2
(22) Date of filing: 19.03.2015
(51) Int. Cl.: F03D 80/70, F03D 80/80, F03D 9/00

(54) **RENEWABLE ENERGY POWER GENERATING APPARATUS AND OPERATION METHOD OF THE SAME**
VORRICHTUNG ZUR STROMERZEUGUNG AUS ERNEUERBARER ENERGIE UND BETRIEBSVERFAHREN DAFÜR
APPAREIL DE GÉNÉRATION D'ÉNERGIE RENOUVELABLE ET PROCÉDÉ D'EXPLOITATION DUDIT SYSTÈME

(30) Priority: 22.08.2014 JP 2014169212
(43) Date of publication of application: 24.02.2016
(73) Proprietor: MITSUBISHI HEAVY INDUSTRIES, LTD., Tokyo 108-8215 (JP)
(72) Inventor: Kameda, Takuro, YOKOHAMA-SHI, KANAGAWA, 220-8401 (JP); Morii, Yoshiyuki, YOKOHAMA-SHI, KANAGAWA, 231-8715 (JP)
(74) Representative: Intès, Didier Gérard André

(56) References cited:
- EP-A1- 2 365 216
- EP-A1- 2 503 148
- EP-A1- 2 687 720
- EP-A2- 2 177 756
- US-A1- 2013 076 042
- US-A1- 2013 319 631

## Description

### TECHNICAL FIELD

The present disclosure relates to a renewable energy power generating apparatus configured to generate power utilizing renewable energy, and an operation method of the same.

### BACKGROUND

Renewable energy power generating apparatus have become widely used in recent years in view of preservation of the global environment, including a wind turbine power generating apparatus utilizing wind energy and a power generating apparatus utilizing tidal current, ocean current or river current. A known renewable energy power generating apparatus includes blades for receiving renewable energy, a hub to which the blades are mounted, a main shaft coupled to the hub, and a generator for converting rotational energy of the main shaft into electric power. A known renewable energy power generating apparatus also includes a mechanical gearbox between a rotor and a generator, or a hydraulic transmission in which a hydraulic pump and a hydraulic motor are combined, as s drive train for transmitting rotational energy of a rotor including the blade and the hub to the generator.

For instance, Patent Document 1 discloses a wind turbine power generating apparatus using a hydraulic pump and a hydraulic motor as a drive train. In this wind turbine power generating apparatus, a hub drives the hydraulic pump to produce pressurized oil, and then the pressurized oil drives a hydraulic motor. Next, a generator coupled to the hydraulic motor converts rotational energy inputted from the hydraulic motor into electric energy, thereby generating electric power. Patent Document 2 discloses a wind turbine power generating apparatus where coolant fluid flows in a circulation pathway including an upper cooling circuit and a lower cooling circuit. In the circulation pathway, the coolant fluid is distributed from a chamber of a reservoir to travel through a heat exchanger associated with heat generating components. One or more pumps may be provided to help the natural transfer of the coolant fluid to the reservoir.

### Citation List

### Patent Literature

Patent Document 1: US Patent Application Pub. No. 2010/0032959
Patent Document 2: US Patent Application Pub. No. 2013/0319631

Further prior art is available from EP2365216A1, CN202746561U, CN102817999A, and CN102818000A.

### SUMMARY

Meanwhile, a renewable energy power generating apparatus employing a mechanical gearbox or a hydraulic transmission includes oil-using units using oil as lubricant oil or hydraulic working oil, for instance. Thus, upon operation of such a renewable energy power generating apparatus, it is necessary to supply oil to the oil-using units.

It takes some time to supply oil to the above oil-using units. For instance, in a renewable energy power generating apparatus using a hydraulic transmission, it is necessary to feed the hydraulic working oil slowly while discharging air existing inside a hydraulic pump, a hydraulic motor, piping, or the like, which requires a long time. Thus, from the perspective of reducing the cost of using an outside facility used to supply oil to the oil-using units, it is desirable to shorten the operation time of the outside facility for supplying oil to the oil-using units.

For instance, in a case of a renewable energy power generating apparatus installed on the ocean, it is desirable to shorten the operation time of an oil transporting ship (an example of the outside facility) used to supply oil to the oil-using units to cut the cost.

In this regard, Patent Document 1 discloses no measure for reducing the operation time of an outside facility for supplying oil when supplying oil from outside to an oil-using unit disposed on an upper part of the tower.

In view of the above issues, an object of at least one embodiment of the present invention is to provide a renewable energy power generating apparatus capable of shortening the operation time of an outside facility for supplying oil when supplying oil from outside to an oil-using unit disposed on an upper part of a tower.

(1) A renewable energy power generating apparatus according to at least one embodiment of the present invention is defined in claim 1.

With the configuration described in the above (1), the in-tower oil tank including the in-tower supply tank is disposed inside the tower, so that it is possible to store the oil from outside temporarily in the in-tower supply tank, instead of directly supplying the oil from outside to the oil-using unit disposed above the tower. Thus, it is sufficient if an outside facility for supplying oil is operated only until the transportation of the oil to the in-tower supply tank is completed, which makes it no longer necessary to keep operating the outside facility until the oil-using unit is completely filled with the oil. As a result, it is possible to shorten the operation time of the outside facility for supplying oil when supplying oil from outside to the oil-using unit positioned above the tower.

(2) In some embodiments, in the configuration described in the above (1), for instance, the renewable energy power generating apparatus further includes: an in-nacelle oil tank disposed inside the nacelle, for receiving the oil to be supplied to the oil-using unit from the in-tower supply tank and storing the oil; an oil circulation line disposed above the tower so that at least a part of the oil circulation line is accommodated in the nacelle, and connected to the oil-using unit and the in-nacelle oil tank, for circulating the oil between the oil-using unit and the in-nacelle oil tank; and a boost pump for feeding the oil stored in the in-nacelle oil tank to the oil-using unit or the oil circulation line to fill the oil-using unit with the oil. The second feed pump is configured to feed the oil stored in the in-tower supply tank to the in-nacelle oil tank.

With the configuration described in the above (2), the oil circulation line for the oil using unit does not extend beyond the nacelle to the tower, but is disposed above the tower. Thus, even when the nacelle is rotatable with respect to the tower during operation of the renewable energy power generating apparatus, it is unnecessary for the pipe constituting the oil circulation line for the oil-using units to have a special structure such as a swivel joint. Thus, it is possible to simplify the oil circulation line for the oil-using unit.

(3) In some embodiments, in the configuration described in the above (1) or (2), for instance, the renewable energy power generating apparatus further includes an oil pan configured to receive leaked oil which has leaked from the oil-using unit disposed in the nacelle.

Oil may occasionally leak out from the oil using unit. With the configuration described in the above (3), it is possible to receive and store the leaked oil having leaked out from the oil using unit with the oil pan, which makes it possible to restrict the leaked oil from flowing out of the renewable energy power generating apparatus.

(4) In some embodiments, in the configuration described in the above (3), for instance, the in-tower oil tank further includes a drain tank disposed at the upper part of the tower and below the oil pan and configured to receive the leaked oil from the oil pan and to store the leaked oil.

The leaked oil from the oil-using unit may be contaminated by sludge or the like produced during operation of the oil-using units. With the above configuration described in the above (4), the drain tank for receiving and storing the leaked oil from the oil pan is provided, which makes it possible to recover the contaminated oil stored in the oil pan to the drain tank.

(5) In some embodiments, in the configuration described in the above (3) or (4), the oil pan includes at least one of an in-tower oil pan disposed below the nacelle and above the in-tower oil tank, at the upper part of the tower, or an in-nacelle oil pan disposed at the lower part of the nacelle inside the nacelle.

With the configuration described in the above (5), it is possible to receive the leaked oil from the upper part of the tower with the in-tower oil pan, or it is possible to receive the leaked oil from above the in-nacelle oil pan with the in-nacelle oil pan.

(6) In some embodiments, in the configuration described in the above (5), the renewable energy power generating apparatus further includes: cables arranged in a vertical direction in the tower and connected to equipment in the nacelle; and an oil guide portion disposed around the cables, inside the tower and above the in-tower oil pan, and configured to guide the leaked oil having leaked from the oil-using unit in the nacelle and flowed from above running down the cables, into the in-tower oil pan.

With the configuration described in the above (6), the oil guide portion configured to guide the leaked oil from the oil-using unit flowing from above the cables arranged in the vertical direction and running down the cables into the in-tower oil pan is disposed around the cables, which makes it possible to prevent the oil from running down the cables to further fall below the oil pan.

(7) In some embodiments, in the configuration described in the above (1) to (6), the renewable energy power generating apparatus further includes a waste-oil tank disposed at the lower part of the tower or on the base on which the tower is built, and configured to receive the oil discharged from the in-tower oil tank and to store the oil.

With the above configuration described in the above (7), since the waste-oil tank configured to receive and store the oil discharged from the in-tower oil tank is provided, it is possible to discharge excess oil having exceeded the amount required for operation of the renewable energy power generating apparatus from the in-tower supply tank to the outside of the tower. Alternatively, it is possible to discharge the leaked oil stored in the drain tank to the outside of the tower. As a result, there would be no extra oil in the in-tower oil tank including the in-tower supply tank or the drain tank during operation of the renewable energy power generating apparatus, which makes it possible to prevent in advance the in-tower oil tank from being damaged by sloshing due to sway of the tower, for instance.

Further, the oil discharged from the in-tower oil tank is occasionally transported to the outside for disposal or regenerating treatment for reasons such as that it is difficult to reuse the oil directly. With the above configuration described in the above (7), since the waste-oil tank is disposed at the lower part of the tower or on the base on which the tower is disposed, it is possible to store the discharged oil in the waste-oil tank temporarily, instead of transporting the oil discharged from the in-tower oil tank directly to the transportation equipment (an outside facility such as an oil transporting ship). Thus, it is sufficient if the outside facility for transporting the discharged oil is operated only until transportation of the oil from the waste-oil tank is completed. As a result, it is possible to shorten the operation time of the outside facility for transporting the discharged oil when discharging the oil in the in-tower oil tank.

(8) In some embodiments, in the configuration described in the above (1) to (7), for instance, the in-tower oil tank is disposed at a height of not less than 0.75L and not more than L from a lower end of the tower, when an entire length of the tower is defined as L.

With the configuration described in the above (8), since the in-tower supply tank is disposed at the upper part of the tower, which is relatively close to the oil-using unit disposed above the tower, it is possible to shorten the distance between the in-tower supply tank and the oil-using unit, to which the in-tower supply tank is to supply oil. Thus, it is possible to facilitate supplying oil to the oil using unit inside the nacelle.

For instance, since much time may be spent to fill the oil-supply using unit with oil, it is sufficient even if the output of the second feed pump for supplying oil to the oil-using unit is small. Further, the first feed pump is disposed at a lower part such as the lower part of the tower so that there is a relatively large difference in height between the first feed pump and the in-tower oil tank, to which the oil is to be fed. On the other hand, since the second feed pump is disposed between the in-tower oil tank and the oil using unit, the difference in height is relatively small between the second feed pump and the oil using unit, to which the oil is to be fed. Thus, the second feed pump may have a small lifting range as compared to the first feed pump. As a result, it is possible to use an inexpensive pump with a small output and a small lifting range as the second feed pump.

(9) In some embodiments, in the configuration described in the above (1) to (8), for instance, the renewable energy power generating apparatus further includes: at least one blade attached to the rotor hub; and a rotation shaft coupled to the rotor hub. The oil-using unit includes at least a unit including a part which is configured to be rotated by the rotation shaft.

(10) A method of operating a renewable energy power generating apparatus according to at least one embodiment of the present invention is defined in claim 10.

With the method described in the above (10), the in-tower supply tank is disposed inside the tower, so that it is possible to store the oil from outside in the in-tower supply tank temporarily, instead of directly supplying the oil from outside to the oil-using unit positioned above the tower. Thus, an outside facility for supplying oil need to be operated only until the transportation of the oil to the in-tower supply tank is completed, which makes it no longer necessary to keep operating the outside facility until the oil-using unit is completely filled with the oil. As a result, it is possible to shorten the operation time of the outside facility for supplying oil when supplying oil from outside to the oil-using unit positioned above the tower.

(11) In some embodiments, in the method described in the above (10), the renewable energy power generating apparatus further includes an in-nacelle oil tank disposed inside the nacelle and an oil circulation line, disposed above the tower so that at least a part of the oil circulation line is accommodated in the nacelle, and connected to the oil-using unit and the in-nacelle oil tank, for circulating the oil between the oil-using unit and the in-nacelle oil tank. Also, in the filling step, the oil stored in the in-tower supply tank is fed to the in-nacelle oil tank to be stored in the in-nacelle oil tank, and the oil having been stored in the in-nacelle oil tank is fed to the oil-using unit or the oil circulation line to fill the oil-using unit with the oil.

With the method described in the above (11), the oil circulation line for the oil using unit does not extend beyond the nacelle to the tower, but is disposed above the tower. Thus, even when the nacelle is rotatable with respect to the tower during operation of the renewable energy power generating apparatus, it is unnecessary for the pipe constituting the oil circulation line for the oil-using units to have a special structure such as a swivel joint. Thus, it is possible to simplify the oil circulation line for the oil-using units.

(12) In some embodiments, in the method described in the above (10) or (11), in the filling step, the oil-using unit is filled with the oil while discharging air which exists in the oil-using unit.

(13) In some embodiments, in the method described in the above (11) or (12), the oil-using unit includes at least one accumulator. Also, in the filling step, the oil is continuously supplied to the in-nacelle oil tank until at least an amount of oil which corresponds to a capacity of the accumulator is stored in the in-nacelle oil tank after filling the oil-using unit except the accumulator with the oil.

In a case where the oil-using unit includes an accumulator, it may be occasionally necessary to supply the oil to the accumulator to its full capacity from the in-nacelle oil tank, depending on the operation state of the renewable energy power generating apparatus. In the method described in the above (13), it is possible to secure the required amount of oil for storing oil in the accumulator to its full capacity in the in-nacelle oil tank, in anticipation of the above situation.

(14) In some embodiments, in the method described in the above (10) to (13), in the feeding step, at least an amount of oil which corresponds to a total volume of the oil-using unit is fed to the oil-using unit through the in-tower supply tank.

(15) In some embodiments, the method described in the above (10) to (14) further includes a discharging step of discharging excess oil existing in the in-tower supply tank to an outside of the tower, after the filling step.

With the method described in the above (15), an excess amount of oil exceeding the amount required for operation of the renewable energy power generating apparatus is discharged to the outside of the tower, so that the in-tower supply tank does not include unnecessary oil. Thus, it is possible to prevent in advance the in-tower supply tank from being damaged by
sloshing due to sway of the tower, for instance.

According to at least one embodiment of the present invention, the provided renewable energy power generating apparatus is capable of shortening the operation time of the outside facility for supplying oil, when supplying oil from outside to the oil-using unit disposed above the tower.

### BRIEF DESCRIPTION OF DRAWINGS

FIG. 1 is a schematic diagram of an overall configuration of a wind turbine power generating apparatus according to one embodiment of the present invention.
FIG. 2 is a schematic diagram of an interior configuration of a nacelle and an upper part of a tower of the wind turbine power generating apparatus according to one embodiment of the present invention.
FIG. 3 is a schematic perspective view of an interior configuration of the nacelle and the upper part of the tower of the wind turbine power generating apparatus according to one embodiment of the present invention.
FIG. 4 is a schematic diagram of a configuration of a hydraulic pump, which is an example of an oil-using unit according to one embodiment.
FIG. 5 is a diagram of an in-tower oil pan and an oil guide portion according to one embodiment of the present invention.
FIG. 6 is a schematic cross-sectional view of the oil guide portion according to one embodiment of the present invention.

### DETAILED DESCRIPTION

Embodiments of the present invention will now be described with reference to the accompanying drawings. It is intended, however, dimensions, materials, shapes, relative positions and the like of components described in the embodiments or the drawings shall be interpreted as illustrative only and not limitative of the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

In the following description of the embodiments, a wind turbine power generating apparatus 1 will be described as an example of renewable power generating apparatuses. However, the present embodiments can be applied to renewable power generating apparatuses in general. Herein, a renewable power generating apparatus refers to a power generating apparatus utilizing renewable energy such as wind, tidal current, ocean current, and river current. For instance, a tidal current power generating apparatus, an ocean current power generating apparatus, and a river current apparatus can be mentioned, in addition to the wind turbine power generating apparatus described in the present embodiments.

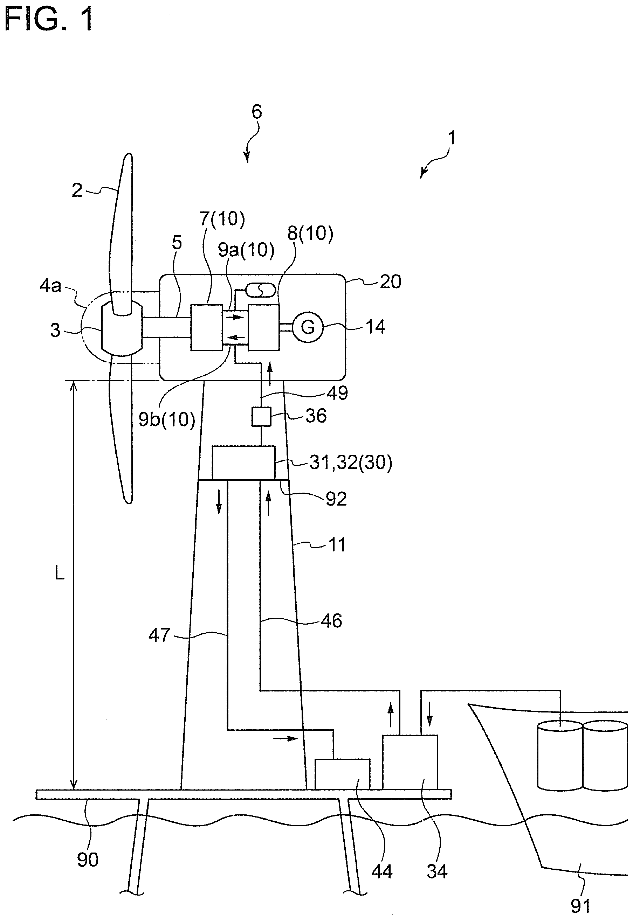

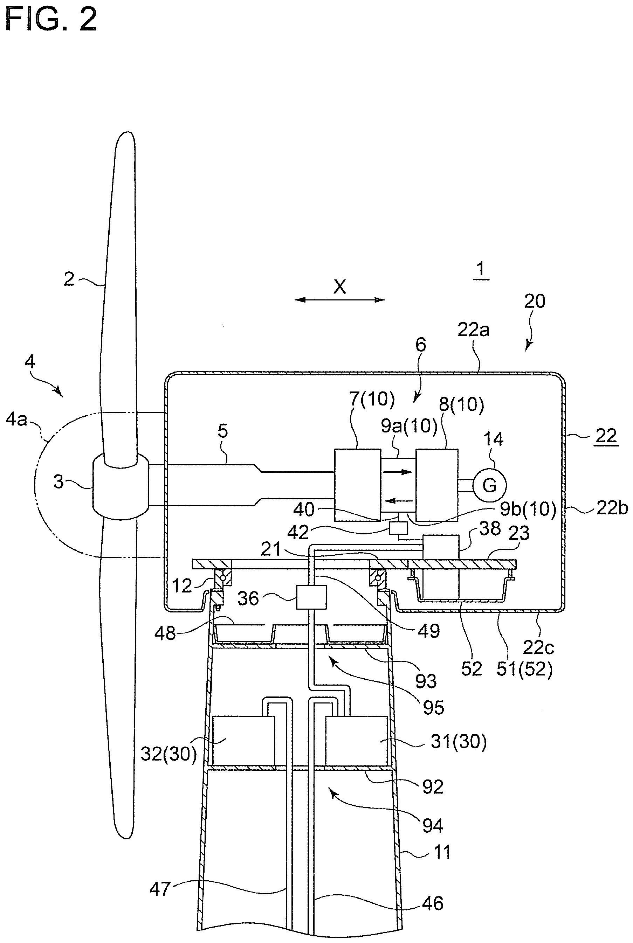

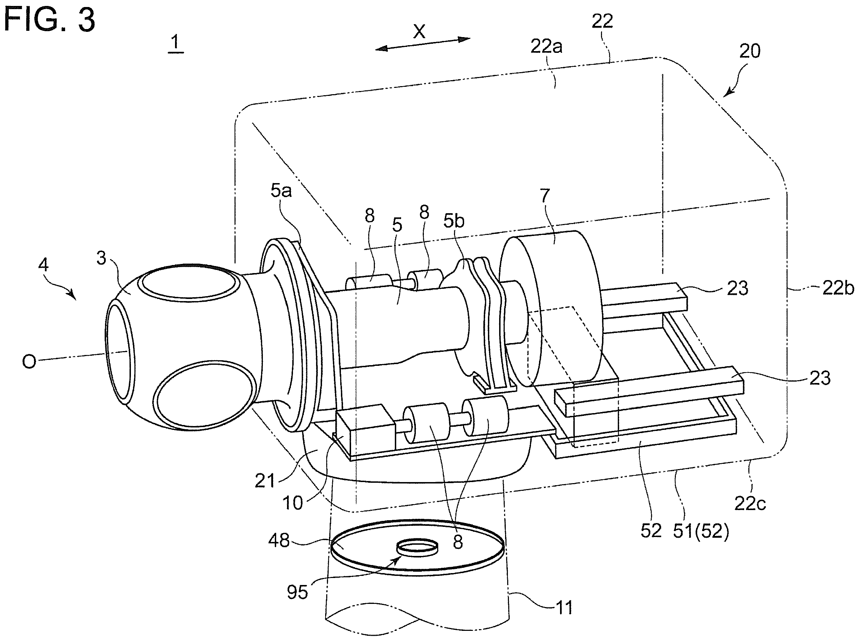

FIG. 1 is a schematic diagram of an overall configuration of a wind turbine power generating apparatus according to one embodiment. FIGs. 2 and 3 are schematic diagrams of an interior configuration of a nacelle and an upper part of a tower of the wind turbine power generating apparatus according to one embodiment.

As illustrated in FIGs. 1 to 3, the wind turbine power generating apparatus 1 according to one embodiment includes a tower 11, a nacelle 20 disposed on an upper part of the tower 11 and supported on the tower 11, and a rotor hub 3 rotatably supported on the nacelle 20. At least one blade 2 is mounted to the rotor hub 3, and a rotation shaft 5 is coupled to the rotor hub 3. Further, the wind turbine power generating apparatus 1 includes a generator 14 for generating electric power, and a drive train 6 for transmitting rotation energy of the rotation shaft 5 to the generator 14. The rotor hub 3 may be covered by a hub cover 4a. The tower 11 of the wind turbine power generating apparatus 1 in FIG. 1 is disposed on a base 90 on the water. The tower 11 may be disposed on an onshore base. Further, the wind turbine power generating apparatus 1 may include a yaw rotation bearing 12 rotatably supporting the nacelle 20 on the tower 11. In one embodiment, the rotation shaft 5, the drive train 6 and the generator 14 are arranged in the interior space of the nacelle 20. In another embodiment, at least one unit in the drive train 6 or the generator 14 may be disposed outside the nacelle 20, such as the interior space of the tower 11.

The wind turbine power generating apparatus 1 is supported on the nacelle 20 or the rotor hub 3, and includes an oil-using unit 10 (for instance, a hydraulic pump 7 described below) disposed above the tower 11, an in-tower oil tank 30 used to supply oil to the oil-using unit 10, the first feed pump 34, and the second feed pump 36.

In the wind turbine power generating apparatus 1 illustrated in FIGs. 1 to 3, the drive train 6 is a hydraulic transmission including a hydraulic pump 7 and a hydraulic motor 8. This drive train 6 includes a hydraulic pump 7 mounted to the rotation shaft 5, and a hydraulic motor 8 connected to the hydraulic pump 7 via a high pressure line 9a and a low pressure line 9b. In FIG. 3, the high pressure line 9a and the low pressure line 9b are not illustrated.

When the blade 2 receives wind and the rotor hub 3 rotates, the rotation shaft 5 coupled to the rotor hub 3 also rotates. The hydraulic pump 7 is driven by the rotation shaft 5 to increase the pressure of the working oil, thereby producing high-pressure working oil (pressurized oil). The outlet of the hydraulic pump 7 is connected to the inlet of the hydraulic motor 8 via the high pressure line 9a. Thus, the pressurized oil produced in the hydraulic pump 7 is supplied to the hydraulic motor 8 via the high pressure line 9a, thereby driving the hydraulic motor 8. The low-pressure working oil having performed work in the hydraulic motor 8 passes through the low pressure line 9b disposed between the outlet of the hydraulic motor 8 and the inlet of the hydraulic pump 7 to be returned again to the hydraulic pump 7. Further, the output shaft of the hydraulic motor 8 is connected to the input shaft of the generator 14, so that the rotation of the hydraulic motor 8 is inputted to the generator 14. For the drive train 6, it is sufficient if at least one hydraulic pump 7, at least one hydraulic pump 8, and at least one generator 14 are provided, so the number is not particularly limited for any of the above.

In the wind turbine power generating apparatus 1 including the above hydraulic transmission as the drive train 6, the oil-using units 10 includes the hydraulic pump 7, the hydraulic motor 8, the piping including the high pressure line 9a and the low pressure line 9b, and various valves constituting the hydraulic transmission.

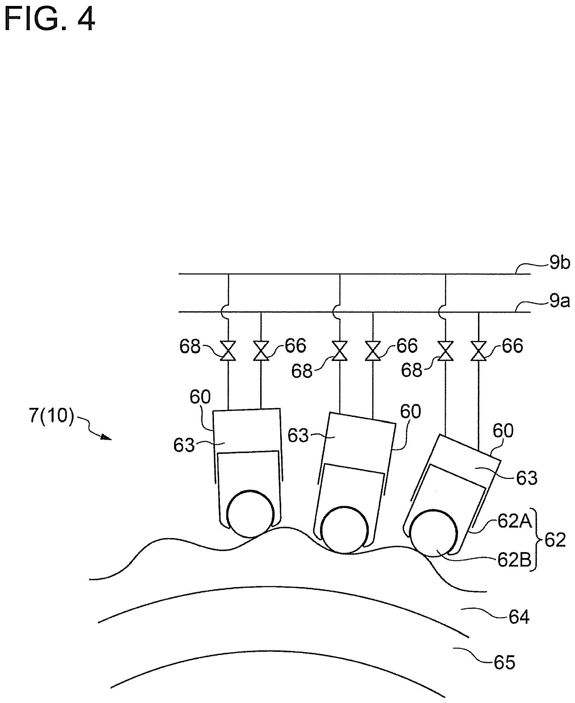

Now, the configuration of the hydraulic pump 7, which is one of the oil-using units, will be described. FIG. 4 is a schematic diagram of a configuration of a hydraulic pump (oil-using unit) according to one embodiment.

The hydraulic pump 7 illustrated in FIG. 4 includes a plurality of working chambers 63 formed by cylinders 60 and pistons 62, a cam 64 including a cam curved surface which engages with the pistons 62, and a high pressure valve 66 and a low pressure valve 68 provided for each of the working chambers 63. In view of smooth operation of the pistons 62 in accordance with the cam curved surface of the cam 64, each piston 62 includes a piston body 62A which slides inside the corresponding cylinder 60 and a piston roller 62B attached to the piston body 62A and engaged with the cam curved surface of the cam 64. The cam 64 is mounted to the outer circumferential surface of the rotational shaft 65 of the hydraulic pump 7, so as to be rotatable with the rotational shaft 65. The rotational shaft 65 of the hydraulic pump 7 is configured to rotate with the rotation shaft 5 of the wind turbine power generating apparatus 1. Each high pressure valve 66 is disposed between the corresponding working chamber 63 and the high pressure line 9a, and configured to be capable of switching the communication state between the working chamber 63 and the high pressure line 9a. On the other hand, each low pressure valve 68 is disposed between the corresponding working chamber 63 and the low pressure line 9b, and configured to be capable of switching the communication state between the working chamber 63 and the low pressure line 9b.

Each piston 62 is disposed in the corresponding cylinder 60 slidably. Each piston 62 is guided by the corresponding cylinder 60 to reciprocate between a bottom dead center and a top dead center along the central axis of the cylinder 60. As a result of the reciprocating motion of the pistons 62, the volume of each working chamber 63 surrounded by the corresponding cylinder 60 and the corresponding piston 62 varies periodically.

The mode of motion is converted between the above reciprocating motion of the pistons 62, which involves the periodical change in the volume of the working chambers 63, and the rotational motion of the cam 64.

For instance, in a case of the above hydraulic pump 7, rotational motion of the cam 64 rotating with the rotational shaft 65 of the hydraulic pump 7 is converted into the reciprocating motion of the pistons 62, so that the volume of the working chambers 63 periodically changes, and thereby high-pressure working oil (pressurized oil) is produced in the working chambers 63.

Further, the hydraulic motor 8 may basically have the same configuration as the hydraulic pump 7. In a case of the hydraulic motor 8, pressurized oil is introduced into the working chambers 63 to cause the reciprocating motion of the pistons 62, and this reciprocation motion is converted into the rotational motion of the cam 64, which results in rotation of the rotational shaft 65 of the hydraulic motor 8 in accordance with the cam 64.

Accordingly, thanks to the function of the cam 64, energy is converted between the rotational energy (mechanical energy) of the rotational shaft 65 of the hydraulic machine (hydraulic pump 7 or hydraulic motor 8) and fluid energy of the working oil, so that the hydraulic machine fulfills its predetermined role as the hydraulic pump 7 or the hydraulic motor 8.

In one embodiment, as illustrated in FIG. 3, the hydraulic pump 7 is supported on the rotor hub 3, and the hydraulic motor 8 is supported on the nacelle 20 via a nacelle base plate 21. The high pressure line 9a and the low pressure line 9b connected to the hydraulic pump 7 and the hydraulic motor 8 are supported on the rotor hub 3 or the nacelle 20 via the hydraulic pump 7 or the hydraulic motor 8. Further, the high pressure valves 66 and the low pressure valves 68 included in the hydraulic pump 7 or the hydraulic motor 8 are also supported on the rotor hub 3 or the nacelle 20 via the hydraulic pump 7 or the hydraulic motor 8. The above oil-using units are disposed above the tower 11, as illustrated in FIGs. 1 to 3.

Further, in one embodiment, the cam 64 of the hydraulic pump 7 is configured to rotate with the rotational shaft 65 of the hydraulic pump 7, and the rotational shaft 65 is configured to rotate with the rotation shaft 5 of the wind turbine power generating apparatus 1. In this case, the cam 64 of the hydraulic pump 7 is a part that is to be rotated by the rotation shaft 5 of the wind turbine power generating apparatus 1.

In one embodiment, the wind turbine power generating apparatus 1 includes a mechanical gearbox as the drive train 6, instead of the above hydraulic transmission. In this case, the oil-using units 10 supported on the nacelle 20 or the rotor hub 3 include the gearbox supplied with lubricant oil, and piping for supplying the lubricant oil to the gearbox. The above gearbox and piping are disposed above the tower 11, for instance, inside the nacelle 20.

In the wind turbine power generating apparatus 1, the in-tower oil tank 30 is disposed at the upper part of the tower 11, and includes an in-tower supply tank 31 for storing oil supplied to the oil-using units 10. Further, the first feed pump 34 is disposed on a base 90 on which the tower 11 is built. The second feed pump 36 is disposed between the in-tower supply tank 31 and the oil-using units 10. Here, the first feed pump 34 may be disposed at the lower part of the tower 11 (inside the tower 11).

In one embodiment, the first feed pump 34 and the in-tower supply tank 31 are connected with each other via the first feed line 46, and the second feed pump 36 and the oil-using units 10 are connected to one another via the second feed line 49.

In one embodiment, oil having been transported from outside is fed to the in-tower supply tank 31 through the first feed line 46 by the first feed pump 34, so as to be stored temporarily in the in-tower supply tank 31. Then, the oil in the in-tower supply tank 31 is supplied to the oil-using units 10 through the second feed line 49 by the second feed pump 36.

In the example illustrated in FIG. 1, the wind turbine power generating apparatus 1 is built on the base 90 installed on the ocean, and oil loaded on an oil transporting ship 91 is fed to the oil-using units 10 of the wind turbine power generating apparatus 1.

According to the above wind turbine power generating apparatus 1, the in-tower oil tank 30 including the in-tower supply tank 31 is disposed in the tower 11, so that it is possible to store oil from outside temporarily in the in-tower supply tank 31 instead of directly supplying the oil from outside to the oil-using units 10 disposed above the tower 11. In this way, it is sufficient if the outside facility for supplying oil is operated only until the transportation of the oil to the in-tower supply tank 31 is completed, which makes it no longer necessary to keep operating the outside facility until the oil-using units 10 are completely filled with oil. As a result, when oil is supplied from outside to the oil-using units 10 disposed above the tower 11, it is possible to shorten the operation time of the outside facility for supplying oil.

It is possible to take time to supply the oil to the oil-using units 10 and to fill the same with the oil, using the second feed pump 36 from the in-tower supply tank 31, after transporting the oil to the in-tower supply tank 31. A relatively smaller pump may be used as the second feed pump 36 than the first feed pump 34 used to feed a relatively large volume of oil to the in-tower supply tank 31 in a short period of time. That is, as the second feed pump 36 used at the upper part of the tower (at a high altitude), a pump smaller than the first feed pump 34 used at the lower part or the like of the tower may be used, which facilitates installation of a unit (the second feed pump 36).

As illustrated in FIGs. 1 and 2, the in-tower oil tank 30 including the in-tower supply tank 31 may be disposed on the first floor 92 disposed in the tower 11. As illustrated in FIG. 2, an opening 94 may be disposed on the center part of the first floor 92. The opening 94 is configured such that various piping and cables are passable through the opening 94 in the vertical direction. Also, the tower 11 may include a plurality of floors including the first floor 92.

As illustrated in FIGs. 1 to 3, the in-tower oil tank 30 is disposed at the upper part of the tower 11. Specifically, when the entire length of the tower 11 is defined as L (see FIG. 1), the in-tower oil tank 30 is disposed at a height of not less than 0.5L and not more than L from the bottom end of the tower 11. In some embodiments, when the entire length of the tower 11 is defined as L (see FIG. 1), the in-tower oil tank 30 is disposed at a height of not less than 0.75L and not more than L from the bottom end of the tower 11.

As described above, since the in-tower oil tank 30 is disposed at the upper part of the tower 11, the in-tower supply tank 31 is disposed at the upper part of the tower 11 relatively closer to the oil-using unit 10 disposed above the tower 11. Thus, it is possible to shorten the distance from the in-tower supply tank 31 to the oil-using units 10, to which oil is to be supplied. As a result, it is possible to facilitate supplying oil to the oil-using units in the nacelle.

For instance, since the oil-using unit may be filled with oil slowly and taking time, the output of the second feed pump for supplying oil to the oil-using units may be small. Further, the first feed pump is disposed at a lower position such as the lower part of the tower, and thus there is a relatively large difference in height between the first feed pump and the in-tower oil tank, to which oil is to be supplied. On the other hand, the second feed pump is disposed between the in-tower oil tank and the oil-using units, and thus there is a relatively small difference in height between the second feed pump and the oil-using units, to which the oil is to be supplied by the second pump. Thus, the second feed pump may have a small lifting range as compared to the first feed pump. As a result, it is possible to use an inexpensive pump with a small output and a small lifting range as the second feed pump.

As illustrated in FIG. 2, the nacelle 20 includes the nacelle base plate 21 mounted to the upper end of the tower 11 via the yaw rotation bearing 12, and a nacelle cover 22 supported on the nacelle base plate 21. The nacelle base plate 21 may include cast steel such as spherical graphite cast iron or high-duty cast iron, for instance. Further, a plurality of frames including a rear frame 23 may be attached and fixed to the nacelle base plate 21. For instance, the rear frame 23 is attached to the rear side of the nacelle base plate 21 so as to extend in the direction X of the rotation shaft of the rotor 4. Further, in the present embodiment, in a direction along the direction X of the rotation shaft of the rotor 4, the rotor hub 3 side is defined as the front side, and the nacelle 20 side is defined as the rear side. The nacelle cover 22 may be supported by at least one of the frames including the rear frame 23. The nacelle cover 22 includes a top part 22a, a side part 22b and a bottom part 22c, which may be arranged so as to surround the rotation shaft 5 and the oil-using units 10.

In some embodiments, as illustrated in FIG. 2, the wind turbine power generating apparatus 1 further includes an in-nacelle oil tank 38, an oil circulation line 40, and a boost pump 42.

The in-nacelle oil tank 38 is an oil tank, disposed inside the nacelle 20, for receiving and storing oil which is to be supplied to the oil-using units 10 from the in-tower supply tank 31.

The oil circulation line 40 is a pipe for circulation of the oil between the oil-using units 10 and the in-nacelle oil tank 38. The oil circulation line 40 is connected to the oil-using units 10 and the in-nacelle oil tank 38, and disposed above the tower 11 so that at least a part of the oil circulation line 40 is accommodated in the nacelle 20.

The boost pump 42 is a pump for feeding the oil stored in the in-nacelle oil tank 38 to the oil-using units 10 or the oil circulation line 40 to fill the using units 10 with the oil, and is disposed between the in-nacelle oil tank 38 and the oil-using units 10 or the oil circulation line 40.

In this case, the second feed pump 36 is configured to feed the oil in the in-tower supply tank 31 to the in-nacelle oil tank 38.

In the above configuration, the oil circulation line 40 for the oil-using units 10 does not extend beyond the nacelle 20 to the tower 11, but is disposed above the tower 11. Thus, even when the nacelle 20 is rotatable with respect to the tower 11 during operation of the wind turbine power generating apparatus 1, it is unnecessary for the pipe constituting the oil circulation line 40 for the oil-using units 10 to have a special structure such as a swivel joint. Thus, it is possible to simplify the oil circulation line 40 for the oil-using units 10.

As illustrated in FIG. 2, the nacelle 20 may be rotatably supported on the tower 11 by the yaw rotation bearing 12.

In some embodiments, the in-nacelle oil tank 38 may be disposed above an in-nacelle oil pan 52 described below. In this case, if oil should leak out of the in-nacelle oil tank 38, it is possible to receive the leaked oil with the in-nacelle oil pan 52 to prevent the oil from leaking out of the wind turbine power generating apparatus 1.

In some embodiments, the oil fed by the boost pump 42 may be hydraulic working oil that is to be stored in the oil-using units 10 (for instance, the hydraulic pump 7 or the hydraulic motor 8) constituting the hydraulic transmission. In some embodiments, the oil fed by the boost pump 42 may be lubricant oil or coolant oil which is to be supplied to the oil-using units 10.

In some embodiments, as illustrated in FIGs. 2 and 3, the wind turbine power generating apparatus 1 further includes an in-tower oil pan 48 and the in-nacelle oil pan 52, which will be described below. The in-tower oil pan 48 and the in-nacelle oil pan 52 are configured to receive the leaked oil having leaked out from the oil-using units 10 disposed inside the nacelle 20.

Oil such as hydraulic working oil and lubricant or coolant oil may leak out from the oil-using units 10 including the hydraulic pump 7, the hydraulic motor 8, and the like disposed above the tower 11.

Providing the above in-tower oil pan 48 and the in-nacelle oil pan 52 makes it possible to receive and store the leaked oil having leaked out from the oil-using units 10 in the in-tower oil pan 48 and the in-nacelle oil pan 52, and thus to restrict outflow of the leaked oil to the outside of the wind turbine power generating apparatus 1.

In some embodiments, as illustrated in FIGs. 1 and 2, the in-tower oil tank 30 is disposed below the in-tower oil pan 48 and the in-nacelle oil pan 52 and at the upper part of the tower 11, and further includes a drain tank 32 configured to received and store the leaked oil from the in-tower oil pan 48 and the in-nacelle oil pan 52.

The leaked oil from the oil-using units 10 may be contaminated by sludge produced during operation of the oil-using units 10. Providing the above drain tank 32 makes it possible to recover the contaminated oil stored in the in-tower oil pan 48 and the in-nacelle oil pan 52 to the drain tank 32.

The drain tank 32 may be disposed on the first floor 92 disposed in the tower, similarly to the in-tower supply tank 31.

Further, the drain tank 32 may be provided as the same casing (in- tower oil tank 30) as the in-tower supply tank 31.

Alternatively, the drain tank 32 may be provided as a different casing from the in-tower supply tank 31. In this case, the drain tank 32 may be disposed on a floor on a different level from the level of the first floor 92 on which the in-tower supply tank 31 is disposed.

The oil pan may be an in-tower oil pan 48 disposed below the nacelle 20 and above the in-tower oil tank 30, at the upper part of the tower 11. Providing the in-tower oil pan 48 makes it possible to receive the leaked oil from above the tower 11 with in-tower oil pan 48.

Further, the oil pan may be an in-nacelle oil pan 52 disposed at the lower part of the nacelle 20 inside the nacelle 20. Providing the in-nacelle oil pan 52 makes it possible to receive the leaked oil from above the in-nacelle oil pan 52 with the in-nacelle oil pan 52.

Further, both of the in-tower oil pan 48 and the in-nacelle oil pan 52 may be provided as the oil pan.

The leaked oil received by the in-tower oil pan 48 or the in-nacelle oil pan 52 may be transferred to the drain tank 32 to be stored therein. In this case, piping for connecting the in-tower oil pan 48 or the in-nacelle oil pan 52 and the drain tank 32 may be provided to introduce the oil to the drain tank 32 from the in-tower oil pan 48 or the in-nacelle oil pan 52.

As illustrated in FIG. 2, the in-tower oil pan 48 may be disposed on the second floor 93 disposed above the first floor 92 in the tower 11. Alternatively, the floor surface itself of the second floor 93 may be configured to receive the leaked oil to provide the in-tower oil pan 48. Also, an opening 95 through which various piping and cables are capable of passing in a direction along the vertical direction may be disposed at the center part of the second floor 93.

In one embodiment, as illustrated in FIGs. 2 and 3, the in-tower oil pan 48 may be formed in a shape of a doughnut-shaped plate with an opening at the center, so that various piping and cables are capable of passing through this opening along a direction along the vertical direction, similarly to the second floor.

In one embodiment, as illustrated in FIGs. 2 and 3, the in-nacelle oil pan 52 is disposed in the interior space of the nacelle 20. In a specific configuration, the in-nacelle oil pan 52 is disposed below the oil-using units (the hydraulic pump 7 in the example illustrated in FIG. 3) disposed at the rear side in the interior space in the nacelle 20, and supported on the nacelle base plate 21 or the frames attached to the nacelle base plate 21 constituting the nacelle 20. For instance, the in-nacelle oil pan 52 is supported on the two rear frames 23 coupled to the rear side of the nacelle base plate 21. In the present embodiment, a side closer to the rotor hub 3 is the front side and the opposite side farther from the rotor hub 3 is the rear side, in the direction X of the rotation shaft of the rotor 4. As described above, with the in-nacelle oil pan 52 supported on the nacelle base plate 21 of a relatively high rigidity or on the rear frame 23 attached to the nacelle base plate 21, it is possible to increase the capacity of the leaked oil which can be received by the in-nacelle oil pan 52.

In some embodiments, the in-nacelle oil pan 52 may be a nacelle oil pan 51 including a nacelle cover 22 disposed on the lower part of the nacelle 20. Specifically, the nacelle oil pan 51 may be formed by at least a part of the bottom part 22c of the nacelle cover 22, or by at least a part of the bottom part 22c and a lower section of the side part 22b. In this way, with the nacelle cover 22 having the function of the in-nacelle oil pan 52, it is possible to reduce the number of units to be disposed inside the nacelle 20, and thus to reduce the weight of the nacelle 20.

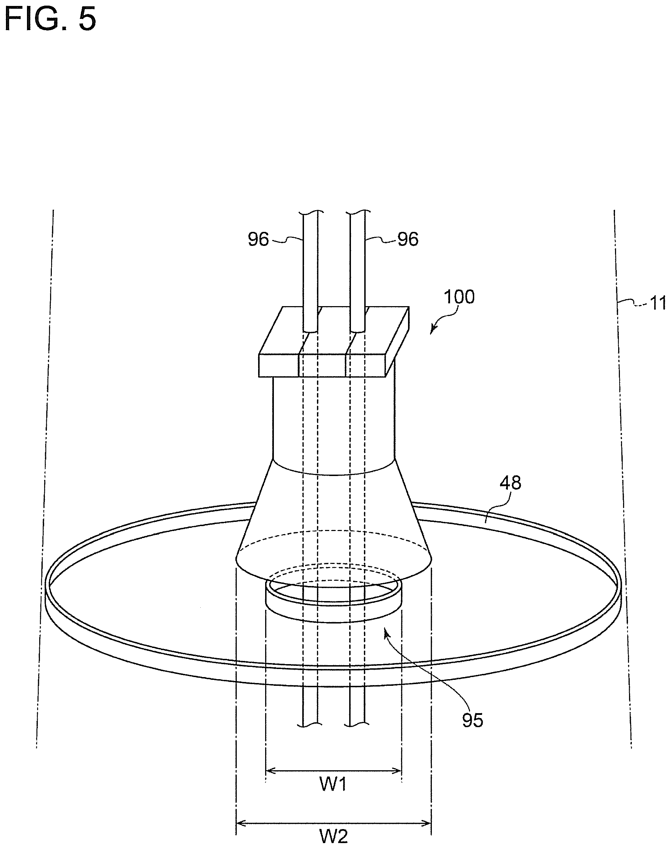

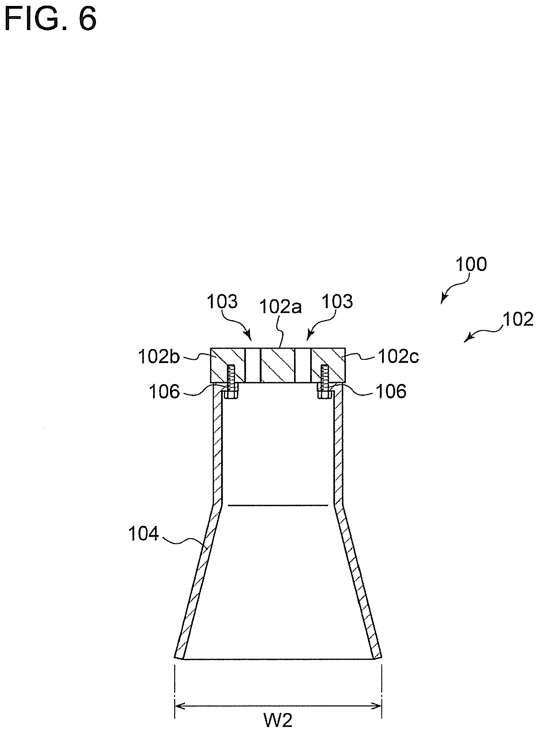

FIG. 5 is a diagram of an in-tower oil pan and an oil guide portion according to one embodiment. FIG. 6 is a schematic cross-sectional view of the oil guide portion.

In some embodiments, as illustrated in FIG. 5, the wind turbine power generating apparatus 1 further includes cables 96 arranged inside the tower 11 in the vertical direction, and an oil guide portion 100 disposed around the cables inside the tower 11 and above the in-tower oil pan 48.

The cables 96 are connected to devices (for instance, the generator 14) inside the nacelle 20, and have the function of connecting the above devices and the equipment below the nacelle. In one embodiment, the cables 96 are arranged in the vertical direction, running through the openings (openings 94, 95) on the floors (e.g. the first floor 92 and the second floor 93) inside the tower 11. Further, the oil guide portion 100 is configured to guide the leaked oil having leaked out of the oil-using units 10 in the nacelle 20 and flowed down the cables 96 from above to the in-tower oil pan 48.

As described above, providing the oil guide portion 100 around the cables 96 makes it possible to prevent the leaked oil, which has leaked out from the oil-using units 10 and flowed down the cables 96 from above, from further falling below the in-tower oil pan 48 on the cables 96.

As illustrated in FIGs. 5 and 6, the oil guide portion 100 according to one embodiment includes a cable holding member 102 and a guide member 104. The cable holding member 102 includes the first element 102a, the second element 102b, and the third element 102c, which sandwich the two cables 96 arranged in the vertical direction in the tower 11 between one another. While the two cables 96 are held between the cable holding member 102 including three elements in FIGs. 5 and 6, the number of the cables 96 arranged in the tower may be one or two or more, and the cable holding member102 may be configured to be capable of holding the cables 96 between its elements in accordance with the number of the cables 96.

In the cable holding member 102, cable insertion holes 103 for inserting cables are formed by assembling the first to third elements 102a to 102c. The cable holding member 102 may include a seal so that the leaked oil having flowed from above the cables running down the cables do not enter between the cables 96 and the cable insertion holes 103.

The guide member 104 is a member for guiding the leaked oil from above the cables received by the cable holding member 102 to the in-tower oil pan 48. The guide member 104 has a cylindrical shape expanded downwardly in the vertical direction in a skirt shape. With the guide member 104 having such a shape, it is possible to guide the leaked oil smoothly to the in-tower oil pan 48. The diameter W2 of the lower end portion (the most expanded portion of the skirt shape) of the guide member 104 is larger than the diameter W1 of the opening of the in-tower oil pan 48. With the diameter W2 being larger than the diameter W1 of the opening of the in-tower oil pan 48, it is possible to guide the leaked oil from above the cables to the in-tower oil pan 48 securely.

The guide member 104 may be fixed to the cable holding member 102 by screws 106.

In some embodiments, as illustrated in FIG. 1, the wind turbine power generating apparatus 1 further includes a waste-oil tank 44 configured to receive and store the oil discharged from the in-tower oil tank 30. In the embodiment illustrated in FIG. 1, the waste-oil tank 44 is disposed on the base 90 on which the tower 11 is disposed.

With the above waste-oil tank 44 provided, it is possible to discharge excess oil that has exceeded the amount required for operation of the wind turbine power generating apparatus 1 from the in-tower supply tank 31 to the outside of the tower, and to discharge the leaked oil stored in the drain tank 32 to the outside of the tower, for instance. As a result, there would be no extra oil in the in-tower oil tank 30 including the in-tower supply tank 31 or the drain tank 32 during operation of the wind turbine power generating apparatus 1, which makes it possible to prevent in advance the in-tower oil tank 30 from being damaged by sloshing due to sway of the tower 11, for instance.

Further, the oil discharged from the in-tower oil tank 30 may be occasionally transported to the outside for disposal or regenerating treatment for reasons such as that it is difficult to reuse the oil directly. With the above wind turbine power generating apparatus 1, since the waste-oil tank 44 is disposed on the base 90 on which the tower 11 is disposed, it is possible to store the discharged oil in the waste-oil tank 44 temporarily, instead of transporting the oil discharged from the in-tower oil tank 30 directly to the transportation equipment (an outside facility such as an oil transporting ship). Thus, it is sufficient if the outside facility for transporting the discharged oil is operated only until transportation of the oil from the waste-oil tank 44 is completed. As a result, it is possible to shorten the operation time of the outside facility for transporting the discharged oil when discharging the oil in the in-tower oil tank 30.

In some embodiments, the waste-oil tank 44 may be disposed at the lower part of the tower 11 (inside the tower 11).

Further, in some embodiments, the in-tower oil tank 30 and the waste-oil tank 44 may be connected to each other via a discharge line 47 so that the oil inside the in-tower oil tank 30 is transported to the waste-oil tank 44 through the discharge line 47.

A method of operating the wind turbine power generating apparatus 1 according to one embodiment includes a feeding step S101 of feeding oil to the in-tower supply tank 31 to store the oil in the in-tower supply tank 31, and a filling step S102 of filling the oil-using units 10 with the oil having been stored in the in-tower supply tank 31 from the in-tower supply tank 31.

Since the method of operating the wind turbine power generating apparatus 1 includes the above feeding step S101 and filling step S102, it is possible to provide the in-tower oil tank 30 including the in-tower supply tank 31 inside the tower 11 and to store the oil from outside temporarily in the in-tower supply tank 31, instead of directly supplying the oil from outside to the oil-using units 10 disposed above the tower 11. In this way, it is sufficient if the outside facility for supplying oil is operated only until the transportation of the oil to the in-tower supply tank 31 is completed, which makes it no longer necessary to keep operating the outside facility until the oil-using units 10 are completely filled with the oil. As a result, when supplying oil from outside to the oil-using units 10 disposed above the tower 11, it is possible to shorten the operation time of the outside facility for supplying oil.

In some embodiments, the wind turbine power generating apparatus 1 includes the in-nacelle oil tank 38 and the oil circulation line 40, and in the filling step S102, the oil stored in the in-tower supply tank 31 is fed to the in-nacelle oil tank 38 to be stored in the in-nacelle oil tank 38, and then the oil-using units 10 are filled with the oil by feeding the oil having been stored in the in-nacelle oil tank 38 to the oil-using units 10 or the oil circulation line 40.

In the above wind turbine power generating apparatus 1, the oil circulation line 40 for the oil-using units 10 does not extend beyond the nacelle 20 to the tower 11 but is disposed above the tower 11. Thus, even when the nacelle 20 is rotatable with respect to the tower 11 during operation of the wind turbine power generating apparatus 1, it is unnecessary for the pipe constituting the oil circulation line 40 for the oil-using units 10 to have a special structure such as a swivel joint. Thus, it is possible to simplify the oil circulation line 40 for the oil-using units 10.

In some embodiments, in the filling step S102, the oil-using units 10 are filled with oil while discharging air which exists inside the oil-using units 10.

In a case where the oil-using units 10 include a hydraulic machine (the hydraulic pump 7 and the hydraulic motor 8), air entering inside a hydraulic circuit may cause malfunction of the hydraulic machine. It is possible to operate the hydraulic machine (the oil-using units 10) stably by filling the oil-using units 10 with the oil while discharging air which exists inside the oil-using units 10 in the filling step S102.

Air may be discharged in the filling step S102 using, for instance, a vacuum pump connected to the hydraulic circuit.

In some embodiments, the oil-using units 10 of the wind turbine power generating apparatus 1 includes an accumulator, and in the filling step S102, the oil is continuously fed to the in-nacelle oil tank 38 until an amount of oil that corresponds to the capacity of the accumulator has been stored in the in-nacelle oil tank 38 after filling the oil-using units 10 except the accumulator with the oil.

In a case where the oil-using units include the accumulator, it may be occasionally necessary to supply the oil to the accumulator to fill its capacity from the in-nacelle oil tank 38, depending on the operation state of the wind turbine power generating apparatus 1. In this embodiment, it is possible to secure the required amount of oil for storing oil in the accumulator to its full capacity in the in-nacelle oil tank 38 in anticipation of the above situation.

In some embodiments, in the feeding step S101, at least an amount of oil that corresponds to the total capacity of the oil-using units 10 is fed to the oil-using units 10 via the in-tower supply tank 31.

Further, in some embodiments, the method further includes a discharging step S103 of discharging excess oil that exists in the in-tower supply tank 31 to the outside of the tower 11, after the filling step S102.

With the discharging step S103 included, an excess amount of oil exceeding the amount required for operation of the wind turbine power generating apparatus 1 is discharged to the outside of the tower 11, so that the in-tower supply tank 31 does not include extra oil. Thus, it is possible to prevent in advance the in-tower supply tank 31 from being damaged by sloshing due to sway of the tower 11, for instance.

The present invention is not particularly limited to the above embodiments, and may include modifications of the above embodiments and combinations of the above embodiments.

## Claims

1. A renewable energy power generating apparatus (1), comprising:
a tower (11);
a nacelle (20) disposed above the tower and supported on the tower;
a rotor hub (3) rotatably supported on the nacelle;
an oil-using unit (10) supported on the nacelle (20) or the rotor hub (3) and positioned above the tower (11);
an in-tower oil tank (30) disposed at an upper part of the tower (11), the in-tower oil tank including an in-tower supply tank (31) for storing oil which is to be supplied to the oil-using unit (10);
a first feed line (46) for connecting an outside facility (91) to the in-tower supply tank (31);
a second feed line (49) for connecting the in-tower supply tank (31) and the oil-using unit (10);
a first feed pump (34) disposed at a lower part of the tower (11) or on a base (90) on which the tower is built, for feeding oil from the outside facility (91) to the in-tower supply tank (31) via the first feed line (46); and
a second feed pump (36) for feeding the oil in the in-tower supply tank (31) to the oil-using unit (10) via the second feed line (49),
wherein the first feed pump (34) is larger than the second feed pump (36) and thus capable of feeding a larger volume of oil per unit of time than the second feed pump (36).

2. The renewable energy power generating apparatus according to claim 1, further comprising:
an in-nacelle oil tank (38) disposed inside the nacelle (20), for receiving the oil to be supplied to the oil-using unit (10) from the in-tower supply tank (31) and storing the oil;
an oil circulation line (40) disposed above the tower (11) so that at least a part of the oil circulation line is accommodated in the nacelle (20) and connected to the oil-using unit (10) and the in-nacelle oil tank (38), for circulating the oil between the oil-using unit and the in-nacelle oil tank; and
a boost pump (42) for feeding the oil stored in the in-nacelle oil tank (38) to the oil-using unit (10) or the oil circulation line (40) to fill the oil-using unit with the oil,
wherein the second feed pump (36) is configured to feed the oil in the in-tower supply tank (31) to the in-nacelle oil tank (38).

3. The renewable energy power generating apparatus according to claim 1 or 2, further comprising:
an oil pan configured to receive leaked oil which has leaked from the oil-using unit (10) disposed in the nacelle (20).

4. The renewable energy power generating apparatus according to claim 3,
wherein the in-tower oil tank (30) further includes a drain tank (32) disposed at the upper part of the tower (11) and below the oil pan and configured to receive the leaked oil from the oil pan and to store the leaked oil.

5. The renewable energy power generating apparatus according to claim 3 or 4,
wherein the oil pan includes at least one of an in-tower oil pan (48) disposed below the nacelle (20) and above the in-tower oil tank (30) at the upper part of the tower or an in-nacelle oil pan (52) disposed at the lower part of the nacelle (20) inside the nacelle.

6. The renewable energy power generating apparatus according to claim 5, further comprising:
cables (96) arranged in a vertical direction in the tower (11) and connected to equipment in the nacelle (20); and
an oil guide portion (100) disposed around the cables (96), inside the tower (11) and above the in-tower oil pan, and configured to guide the leaked oil having leaked from the oil-using unit (10) in the nacelle and flowed from above running down the cables, into the in-tower oil pan (48).

7. The renewable energy power generating apparatus according to any one of claims 1 to 6, further comprising a waste-oil tank (44) disposed at the lower part of the tower (11) or on the base (90) on which the tower is built, and configured to receive the oil discharged from the in-tower oil tank (30) and to store the oil.

8. The renewable energy power generating apparatus according to any one of claims 1 to 7,
wherein the in-tower oil tank (30) is disposed at a height of not less than 0.75L and not more than L from a lower end of the tower (11), when an entire length of the tower is defined as L,
wherein the second feed pump (36) has a smaller lifting range than the first feed pump (34).

9. The renewable energy power generating apparatus according to any one of claims 1 to 8, further comprising:
at least one blade (2) attached to the rotor hub (3); and
a rotation shaft (5) coupled to the rotor hub (3),
wherein the oil-using unit includes at least a unit including a part which is configured to be rotated by the rotation shaft.

10. A method of operating a renewable energy power generating apparatus which includes:
a tower (11);
a nacelle (20) disposed at an upper part of the tower and supported on the tower;
an oil-using unit (10) disposed in an interior space of the nacelle (20);
an in-tower supply tank (31) disposed at the upper part of the tower;
a first feed line (46) for connecting an outside facility (91) to the in-tower supply tank (31);
a second feed line (49) for connecting the in-tower supply tank (31) and the oil-using unit (10);
a first feed pump (34) provided on the first feed line (46) and disposed at a lower part of the tower (11) or on a base (90) on which the tower is built; and
a second feed pump (36) provided on the second feed line (49),
wherein the first feed pump (34) is larger than the second feed pump (36) and thus capable of feeding a larger volume of oil per unit of time than the second feed pump (36),
the operation method comprising:
a feeding step (S101) of feeding oil from the outside facility (91) to the in-tower supply tank (31) via the first feed line (46) using the first feed pump (34) to store the oil in the in-tower supply tank (31); and
a filling step (S102) of filling the oil-using unit (10) with the oil stored in the in-tower supply tank (31) from the in-tower supply tank (31) via the second feed line (49) using the second feed pump (36).

11. The method of operating a renewable energy power generating apparatus according to claim 10,
wherein the renewable energy power generating apparatus (1) further includes an in-nacelle oil tank (38) disposed inside the nacelle (20) and an oil circulation line (40), disposed above the tower (11) so that at least a part of the oil circulation line is accommodated in the nacelle and connected to the oil-using unit (10) and the in-nacelle oil tank (38), for circulating the oil between the oil-using unit and the in-nacelle oil tank, and
wherein, in the filling step (S102), the oil stored in the in-tower supply tank (31) is supplied to the in-nacelle oil tank to be stored in the in-nacelle oil tank (38), and the oil stored in the in-nacelle oil tank (38) is supplied to the oil-using unit (10) or the oil circulation line (40) to fill the oil-using unit with the oil.

12. The method of operating a renewable energy power generating apparatus according to claim 10 or 11,
wherein, in the filling step (S102), the oil-using unit (10) is filled with the oil while discharging air which exists in the oil-using unit.

13. The method of operating a renewable energy power generating apparatus according to claim 11 or 12,
wherein the oil-using unit (10) includes at least one accumulator (13), and
wherein, in the filling step (S102), the oil is continuously supplied to the in-nacelle oil tank (38) until at least an amount of oil which corresponds to a capacity of the accumulator (13) is stored in the in-nacelle oil tank (38) after filling the oil-using unit (10) except the accumulator (13) with the oil.

14. The method of operating a renewable energy power generating apparatus according to any one of claims 10 to 13,
wherein, in the feeding step (S101), at least an amount of oil which corresponds to a total volume of the oil-using unit (10) is fed to the oil-using unit through the in-tower supply tank (31).

15. The method of operating a renewable energy power generating apparatus according to any one of claims 10 to 14, further comprising a discharging step (S103) of discharging excess oil existing in the in-tower supply tank (31) to an outside of the tower (11), after the filling step (S102).

## Patentansprüche

1. Vorrichtung zur Erzeugung von Strom aus erneuerbarer Energie (1), umfassend
einen Turm (11),
eine Gondel (20), die über dem Turm angeordnet ist und vom Turm getragen wird,
eine Rotornabe (3), die drehbar von der Gondel getragen wird,
eine ölverbrauchende Einheit (10), die von der Gondel (20) oder der Rotornabe (3) getragen wird und über dem Turm (11) positioniert ist,
einen im Turm befindlichen Öltank (30), der in einem oberen Teil des Turms (11) angeordnet ist, wobei der im Turm befindliche Öltank einen im Turm befindlichen Versorgungstank (31) zum Speichern von Öl enthält, das der ölverbrauchenden Einheit (10) zugeführt werden soll,
eine erste Förderleitung (46) zum Verbinden einer externen Einrichtung (91) mit dem im Turm befindlichen Versorgungstank (31),
eine zweite Förderleitung (49) zum Verbinden des im Turm befindlichen Versorgungstanks (31) und der ölverbrauchenden Einheit (10),
eine erste Förderpumpe (34), die in einem unteren Teil des Turms (11) oder einem Fundament (90), auf dem der Turm errichtet ist, angeordnet ist, zum Fördern von Öl von der externen Einrichtung (91) über die erste Förderleitung (46) zu dem im Turm befindlichen Versorgungstank (31) und
eine zweite Förderleitung (36) zum Fördern des Öls in dem im Turm befindlichen Versorgungstank (31) über die zweite Förderleitung (49) zu der ölverbrauchenden Einheit (10),
wobei die erste Förderpumpe (34) größer ist als die zweite Förderpumpe (36) und damit in der Lage ist, ein größeres Ölvolumen pro Zeiteinheit zu fördern als die zweite Förderpumpe (36).

2. Vorrichtung zur Erzeugung von Strom aus erneuerbarer Energie nach Anspruch 1, ferner umfassend:
einen in der Gondel befindlichen Öltank (38), der im Inneren der Gondel (20) angeordnet ist, zum Aufnehmen des Öls, das von dem im Turm befindlichen Versorgungstank (31) der ölverbrauchenden Einheit (10) zugeführt werden soll, und zum Speichern von Öl,
eine Ölzirkulationsleitung (40), die über dem Turm (11) angeordnet ist, sodass mindestens ein Teil der Ölzirkulationsleitung in der Gondel (20) aufgenommen ist, und die mit der ölverbrauchenden Einheit (10) und dem in der Gondel befindlichen Öltank (38) verbunden ist, zum Zirkulieren des Öls zwischen der ölverbrauchenden Einheit und dem in der Gondel befindlichen Öltank und
eine Speisepumpe (42) zum Zuführen des Öls, das in dem in der Gondel befindlichen Öltank (38) gespeichert ist, zu der ölverbrauchenden Einheit (10) oder zu der Ölzirkulationsleitung (40) zum Befüllen der ölverbrauchenden Einheit mit Öl,
wobei die zweite Förderpumpe (36) dazu konfiguriert ist, das Öl in dem im Turm befindlichen Versorgungstank (31) in den in der Gondel befindlichen Öltank (38) zu fördern.

3. Vorrichtung zur Erzeugung von Strom aus erneuerbarer Energie nach Anspruch 1 oder 2, ferner umfassend:
einen Ölsumpf, der zur Aufnahme von Leckageöl konfiguriert ist, das aus der in der Gondel (20) angeordneten ölverbrauchenden Einheit (10) austritt.

4. Vorrichtung zur Erzeugung von Strom aus erneuerbarer Energie nach Anspruch 3,
wobei der im Turm befindliche Öltank (30) ferner einen Entleerungstank (32) enthält, der im oberen Teil des Turms (11) und unter dem Ölsumpf angeordnet und dazu konfiguriert ist, das Leckageöl aus dem Ölsumpf aufzunehmen und das Leckageöl zu speichern.

5. Vorrichtung zur Erzeugung von Strom aus erneuerbarer Energie nach Anspruch 3 oder 4,
wobei der Ölsumpf mindestens einen im Turm befindlichen Ölsumpf (48), der unter der Gondel (20) und über dem im Turm befindlichen Öltank (30) im oberen Teil des Turms angeordnet ist, oder einen in der Gondel befindlichen Ölsumpf (52) enthält, der im unteren Teil der Gondel (20) im Inneren der Gondel angeordnet ist.

6. Vorrichtung zur Erzeugung von Strom aus erneuerbarer Energie nach Anspruch 5, ferner umfassend:
Kabel (96), die in vertikaler Richtung im Turm (11) angeordnet und mit Vorrichtungen in der Gondel (20) verbunden sind, und
einen Ölführungsabschnitt (100), der um die Kabel (96) im Inneren des Turms (11) und über dem im Turm befindlichen Ölsumpf angeordnet und dazu konfiguriert ist, das Leckageöl, das aus der ölverbrauchenden Einheit (10) in der Gondel ausgetreten ist und von oben entlang der Kabel strömt, in den im Turm befindlichen Ölsumpf (48) zu leiten.

7. Vorrichtung zur Erzeugung von Strom aus erneuerbarer Energie nach einem der Ansprüche 1 bis 6, ferner umfassend einen Altöltank (44), der im unteren Teil des Turms (11) oder auf dem Fundament (90), auf dem der Turm errichtet ist, angeordnet und dazu konfiguriert ist, das aus dem im Turm befindlichen Öltank (30) abgegebene Öl aufzunehmen und zu speichern.

8. Vorrichtung zur Erzeugung von Strom aus erneuerbarer Energie nach einem der Ansprüche 1 bis 7,
wobei der im Turm befindliche Öltank (30) in einer Höhe von nicht weniger als 0,75 L und nicht mehr als L von einem unteren Ende des Turms (11) angeordnet ist, wenn eine Gesamtlänge des Turms als L definiert ist,
wobei die zweite Förderpumpe (36) einen geringeren Hebebereich hat als die erste Förderpumpe (34).

9. Vorrichtung zur Erzeugung von Strom aus erneuerbarer Energie nach einem der Ansprüche 1 bis 8, ferner umfassend:
mindestens ein Rotorblatt (2), das an der Rotornabe (3) befestigt ist, und
eine Drehwelle (5), die mit der Rotornabe (3) verbunden ist,
wobei die ölverbrauchende Einheit mindestens eine Einheit enthält, die ein Teil enthält, das Drehen durch die Drehwelle konfiguriert ist.

10. Verfahren zum Betreiben einer Vorrichtung zur Erzeugung von Strom aus erneuerbarer Energie, die umfasst:
einen Turm (11),
eine Gondel (20), die in einem oberen Teil des Turmes angeordnet ist und vom Turm getragen wird,
eine ölverbrauchende Einheit (10), die in einem Innenraum der Gondel (20) angeordnet ist,
einen im Turm befindlichen Versorgungstank (31), der im oberen Teil des Turms angeordnet ist,
eine erste Förderleitung (46) zum Verbinden einer externen Einrichtung (91) mit dem im Turm befindlichen Versorgungstank (31),
eine zweite Förderleitung (49) zum Verbinden des im Turm befindlichen Versorgungstanks (31) und der ölverbrauchenden Einheit (10),
eine erste Förderpumpe (34), die an der ersten Förderleitung (46) vorgesehen und in einem unteren Teil des Turms (11) oder auf einem Fundament (90), auf dem der Turm errichtet ist, angeordnet ist, und eine zweite Förderpumpe (36), die an der zweiten Förderleitung (49) vorgesehen ist,
wobei die erste Förderpumpe (34) größer ist als die zweite Förderpumpe (36) und damit in der Lage ist, ein größeres Ölvolumen pro Zeiteinheit zu fördern als die zweite Förderpumpe (36),
wobei das Verfahren umfasst:
einen Förderschritt (S101) zum Fördern von Öl mithilfe der ersten Fördererpumpe (34) von der externen Einrichtung (91) über die erste Förderleitung (46) zu dem im Turm befindlichen Versorgungstank (31) um das Öl in dem im Turm befindlichen Versorgungstank (31) zu speichern, und
einen Befüllschritt (S102) zum Befüllen der ölverbrauchenden Einheit (10) mithilfe der zweiten Förderpumpe (36) mit dem Öl, das in dem im Turm befindlichen Versorgungstank (31) gespeichert ist, aus dem im Turm befindlichen Versorgungstank (31) über die zweite Versorgungsleistung (49).

11. Verfahren zum Betreiben einer Vorrichtung zur Erzeugung von Strom aus erneuerbarer Energie nach Anspruch 10,
wobei die Vorrichtung zur Erzeugung von Strom aus erneuerbarer Energie (1) ferner einen in der Gondel befindlichen Öltank (38), der im Inneren der Gondel (20) angeordnet ist, und eine Ölzirkulationsleitung (40) enthält, die über dem Turm (11) angeordnet ist, sodass mindestens ein Teil der Ölzirkulationsleitung in der Gondel (20) aufgenommen ist, und die mit der ölverbrauchenden Einheit (10) und dem in der Gondel befindlichen Öltank (38) verbunden ist, zum Zirkulieren des Öls zwischen der ölverbrauchenden Einheit und dem in der Gondel befindlichen Öltank und
wobei das Öl, das in dem im Turm befindlichen Versorgungstank (31) gespeichert ist, im Befüllschritt (S102) zum Speichern in dem in der Gondel befindlichen Öltank (38) in den in der Gondel befindlichen Öltank (38) eingespeist wird und das Öl, das in dem in der Gondel befindlichen Öltank gespeichert ist, zum Befüllen der ölverbrauchenden Einheit mit Öl in die ölverbrauchende Einheit (10) oder die Ölzirkulationsleitung (40) eingespeist wird.

12. Verfahren zum Betreiben einer Vorrichtung zur Erzeugung von Strom aus erneuerbarer Energie nach Anspruch 10 oder 11,
wobei die ölverbrauchende Einheit (10) im Befüllschritt (S102) mit dem Öl befüllt wird, während in der ölverbrauchenden Einheit vorhandene Luft ausströmt.

13. Verfahren zum Betreiben einer Vorrichtung zur Erzeugung von Strom aus erneuerbarer Energie nach Anspruch 11 oder 12,
wobei die ölverbrauchende Einheit (10) mindestens einen Akkumulator (13) enthält und
wobei das Öl im Befüllschritt (S102) kontinuierlich in den in der Gondel befindlichen Öltank (38) eingespeist wird, bis nach dem Befüllen der ölverbrauchenden Einheit (10) mit Ausnahme des Akkumulators (13) mit Öl mindestens eine Menge Öl in dem in der Gondel befindlichen Öltank (38) gespeichert ist, die einer Kapazität des Akkumulators (13) entspricht.

14. Verfahren zum Betreiben einer Vorrichtung zur Erzeugung von Strom aus erneuerbarer Energie nach einem der Ansprüche 10 bis 13,
wobei im Befüllschritt (S102) mindestens eine Menge Öl durch den im Turm befindlichen Versorgungstank (31) zu der ölverbrauchenden Einheit gespeist wird, die einem Gesamtvolumen der ölverbrauchenden Einheit (10) entspricht.

15. Verfahren zum Betreiben einer Vorrichtung zur Erzeugung von Strom aus erneuerbarer Energie nach einem der Ansprüche 10 bis 14, ferner umfassend einen Ablassschritt (S103) zum Ablassen von überschüssigem Öl in dem im Turm befindlichen Versorgungstank (31) zu einer Außenseite des Turms (11) nach dem Befüllschritt (S102).

## Revendications

1. Dispositif de génération d'énergie renouvelable (1), comprenant :
une tour (11) ;
une nacelle (20) disposée au-dessus de la tour et supportée sur la tour ;
un moyeu de rotor (3) supporté de façon rotative sur la nacelle ;
une unité d'utilisation d'huile (10) supportée sur la nacelle (20) ou le moyeu de rotor (3) et positionnée au-dessus de la tour (11) ;
un réservoir d'huile intérieur à la tour (30) disposé au niveau d'une partie supérieure de la tour (11), le réservoir d'huile dans la tour comprenant un réservoir d'alimentation intérieur à la tour (31) pour stocker de l'huile qui doit être fournie à l'unité d'utilisation d'huile (10) ;
une première conduite d'alimentation (46) pour relier une installation extérieure (91) au réservoir d'alimentation intérieur à la tour (31) ;
une deuxième conduite d'alimentation (49) pour relier le réservoir d'alimentation intérieur à la tour (31) et l'unité d'utilisation d'huile (10) ;
une première pompe d'alimentation (34) disposée au niveau d'une partie inférieure de la tour (11) ou sur une base (90) sur laquelle la tour est construite, pour délivrer de l'huile depuis l'installation extérieure (91) jusqu'au réservoir d'alimentation intérieur à la tour (31) par l'intermédiaire de la première conduite d'alimentation (46) ; et
une deuxième pompe d'alimentation (36) pour délivrer l'huile dans le réservoir d'alimentation intérieur à la tour (31) à l'unité d'utilisation d'huile (10) par l'intermédiaire de la deuxième conduite d'alimentation (49),
dans lequel la première pompe d'alimentation (34) est plus grande que la deuxième pompe d'alimentation (36) et ainsi capable de délivrer un plus grand volume d'huile par unité de temps que la deuxième pompe d'alimentation (36).

2. Dispositif de génération d'énergie renouvelable selon la revendication 1, comprenant en outre :
un réservoir d'huile intérieur à la nacelle (38) disposé à l'intérieur de la nacelle (20), pour recevoir l'huile devant être fournie à l'unité d'utilisation d'huile (10) depuis le réservoir d'alimentation intérieur à la tour (31) et stocker l'huile ;
une conduite de circulation d'huile (40) disposée au-dessus de la tour (11) de telle sorte qu'au moins une partie de la conduite de circulation d'huile est logée dans la nacelle (20) et reliée à l'unité d'utilisation d'huile (10) et au réservoir d'huile intérieur à la nacelle (38), pour faire circuler l'huile entre l'unité d'utilisation d'huile et le réservoir d'huile intérieur à la nacelle (38) ; et
une pompe de gavage (42) pour fournir l'huile stockée dans le réservoir d'huile intérieur à la nacelle (38) à l'unité d'utilisation d'huile (10) ou à la conduite de circulation d'huile (40) pour remplir d'huile l'unité d'utilisation d'huile,
dans lequel la deuxième pompe d'alimentation (36) est configurée pour délivrer l'huile dans le réservoir d'alimentation intérieur à la tour (31) au réservoir d'huile dans la nacelle (38).

3. Dispositif de génération d'énergie renouvelable selon la revendication 1 ou 2, comprenant en outre :
un bac à huile configuré pour recevoir de l'huile qui a fui de l'unité d'utilisation d'huile (10) disposée dans la nacelle (20).

4. Dispositif de génération d'énergie renouvelable selon la revendication 3,
dans lequel le réservoir d'huile intérieur à la tour (30) comprend en outre un réservoir de vidange (32) disposé au niveau de la partie supérieure de la tour (11) et sous le bac à huile et configuré pour recevoir l'huile qui a fui du bac à huile et pour stocker l'huile qui a fui.

5. Dispositif de génération d'énergie renouvelable selon la revendication 3 ou 4,
dans lequel le bac à huile comprend au moins l'un d'un bac à huile dans la tour (48) disposé sous la nacelle (20) et au-dessus du réservoir d'huile dans la tour (30) au niveau de la partie supérieure de la tour ou d'un bac à huile intérieur à la nacelle (52) disposé au niveau de la partie inférieure de la nacelle (20) à l'intérieur de la nacelle.

6. Dispositif de génération d'énergie renouvelable selon la revendication 5, comprenant en outre :
des câbles (96) disposés dans une direction verticale dans la tour (11) et reliés à un équipement dans la nacelle (20) ; et
une partie de guidage d'huile (100) disposée autour des câbles (96), à l'intérieur de la tour (11) et au-dessus du bac à huile intérieur à la tour, et configurée pour guider l'huile qui a fui de l'unité d'utilisation d'huile (10) dans la nacelle et s'est écoulée depuis le dessus le long des câbles, dans le bac à huile intérieur à la tour (48).

7. Dispositif de génération d'énergie renouvelable selon l'une quelconque des revendications 1 à 6, comprenant en outre un réservoir d'huile usagée (44) disposé au niveau de la partie inférieure de la tour (11) ou sur la base (90) sur laquelle la tour est construite, et configuré pour recevoir l'huile évacuée du réservoir d'huile intérieur à la tour (30) et pour stocker l'huile.

8. Dispositif de génération d'énergie renouvelable selon l'une quelconque des revendications 1 à 7,
dans lequel le réservoir d'huile intérieur à la tour (30) est disposé à une hauteur de pas moins de 0,75L et pas plus de L par rapport à une extrémité inférieure de la tour (11), quand une longueur totale de la tour est définie comme L,
dans lequel la deuxième pompe d'alimentation (36) a une plage de relevage plus petite que la première pompe d'alimentation (34).

9. Dispositif de génération d'énergie renouvelable selon l'une quelconque des revendications 1 à 8, comprenant en outre :
au moins une pale (2) fixée sur le moyeu de rotor (3) ; et
un arbre de rotation (5) couplé au moyeu de rotor (3),
dans lequel l'unité d'utilisation d'huile comprend au moins une unité comprenant une partie qui est configurée pour être entraînée en rotation par l'arbre de rotation.

10. Procédé de mise en oeuvre d'un dispositif de génération d'énergie renouvelable qui comprend :
une tour (11) ;
une nacelle (20) disposée au niveau d'une partie supérieure de la tour et supportée sur la tour ;
une unité d'utilisation d'huile (10) disposée dans un espace intérieur de la nacelle (20) ;
un réservoir d'alimentation intérieur à la tour (31) disposé au niveau de la partie supérieure de la tour ;
une première conduite d'alimentation (46) pour relier une installation extérieure (91) au réservoir d'alimentation intérieur à la tour (31) ;
une deuxième conduite d'alimentation (49) pour relier le réservoir d'alimentation intérieur à la tour (31) et l'unité d'utilisation d'huile (10) ;
une première pompe d'alimentation (34) prévue sur la première conduite d'alimentation (46) et disposée au niveau d'une partie inférieure de la tour (11) ou sur une base (90) sur laquelle la tour est construite ; et
une deuxième pompe d'alimentation (36) prévue sur la deuxième conduite d'alimentation (49),
dans lequel la première pompe d'alimentation (34) est plus grande que la deuxième pompe d'alimentation (36) et ainsi capable de délivrer un plus grand volume d'huile par unité de temps que la deuxième pompe d'alimentation (36),
le procédé de mise en oeuvre comprenant :
une étape d'alimentation (S101) dans laquelle on délivre de l'huile depuis l'installation extérieure (91) jusqu'au réservoir d'alimentation intérieur à la tour (31) par l'intermédiaire de la première conduite d'alimentation (46) en utilisant la première pompe d'alimentation (34) pour stocker l'huile dans le réservoir d'alimentation intérieur à la tour (31) ; et
une étape de remplissage (S102) dans laquelle on remplit l'unité d'utilisation d'huile (10) avec de l'huile stockée dans le réservoir d'alimentation intérieur à la tour (31) à partir du réservoir d'alimentation intérieur à la tour (31) par l'intermédiaire de la deuxième conduite d'alimentation (49) en utilisant la deuxième pompe d'alimentation (36).

11. Procédé de mise en oeuvre d'un dispositif de génération d'énergie renouvelable selon la revendication 10,
dans lequel le dispositif de génération d'énergie renouvelable (1) comprend en outre un réservoir d'huile intérieur à la nacelle (38) disposé à l'intérieur de la nacelle (20) et une conduite de circulation d'huile (40), disposée au-dessus de la tour (11) de telle sorte qu'au moins une partie de la conduite de circulation d'huile est logée dans la nacelle et reliée à l'unité d'utilisation d'huile (10) et au réservoir d'huile intérieur à la nacelle (38), pour faire circuler l'huile entre l'unité d'utilisation d'huile et le réservoir d'huile intérieur à la nacelle, et
dans lequel, dans l'étape de remplissage (S102), l'huile stockée dans le réservoir d'alimentation intérieur à la tour (31) est délivrée au réservoir d'huile intérieur à la nacelle pour être stockée dans le réservoir d'huile intérieur à la nacelle (38), et l'huile stockée dans le réservoir d'huile intérieur à la nacelle (38) est délivrée à l'unité d'utilisation d'huile (10) ou à la conduite de circulation d'huile (40) pour remplir l'unité d'utilisation d'huile avec l'huile.

12. Procédé de mise en oeuvre d'un dispositif de génération d'énergie renouvelable selon la revendication 10 ou 11,
dans lequel, dans l'étape de remplissage (S102), l'unité d'utilisation d'huile (10) est remplie avec l'huile tout en évacuant l'air qui existe dans l'unité d'utilisation d'huile.

13. Procédé de mise en oeuvre d'un dispositif de génération d'énergie renouvelable selon la revendication 11 ou 12,
dans lequel l'unité d'utilisation d'huile (10) comprend au moins un accumulateur (13), et
dans lequel, dans l'étape de remplissage (S102), l'huile est délivrée en continu au réservoir d'huile intérieur à la nacelle (38) jusqu'à ce qu'au moins une quantité d'huile qui correspond à une capacité de l'accumulateur (13) soit stockée dans le réservoir d'huile intérieur à la nacelle (38) après remplissage avec l'huile de l'unité d'utilisation d'huile (10) excepté l'accumulateur (13).

14. Procédé de mise en oeuvre d'un dispositif de génération d'énergie renouvelable selon l'une quelconque des revendications 10 à 13,
dans lequel, dans l'étape d'alimentation (S101), au moins une quantité d'huile qui correspond à un volume total de l'unité d'utilisation d'huile (10) est délivrée à l'unité d'utilisation d'huile par l'intermédiaire du réservoir d'alimentation intérieur à la tour (31).

15. Procédé de mise en oeuvre d'un dispositif de génération d'énergie renouvelable selon l'une quelconque des revendications 10 à 14, comprenant en outre une étape d'évacuation (S103) dans laquelle on évacue l'excédent d'huile existant dans le réservoir d'alimentation intérieur à la tour (31) à l'extérieur de la tour (11), après l'étape de remplissage (S102).
